# EUROPEAN PATENT APPLICATION

(11) **EP 4 276 959 A1**
(43) Date of publication of application: **15.11.2023**
(21) Application number: 22870314.6
(22) Date of filing: 15.09.2022
(51) Int. Cl.: H01M 10/04

(54) **SECONDARY BATTERY MANUFACTURING APPARATUS AND SECONDARY BATTERY MANUFACTURING METHOD USING SAME**

(30) Priority: 16.09.2021 KR 20210124357; 13.09.2022 KR 20220115228
(71) Applicant: LG Energy Solution, Ltd., Seoul 07335 (KR)
(72) Inventor: YEE, Min Ha, Daejeon 34122 (KR); PARK, Ki Beom, Daejeon 34122 (KR); SONG, Eui Seob, Daejeon 34122 (KR); LI, Zheng Hua, Daejeon 34122 (KR); LEE, Hyo Joon, Daejeon 34122 (KR); SONG, Eun Ji, Daejeon 34122 (KR)
(74) Representative: Plasseraud IP
(86) International application number: PCT/KR2022/013798
(87) International publication number: WO 2023/043230

(57) **Abstract**

The present invention relates to an apparatus for manufacturing a secondary battery and a method for manufacturing a secondary battery using the same, and more particularly, to an apparatus for manufacturing a secondary battery, which is capable of improving a non-bonded area of an electrode and a separator inside an electrode unit and a non-bonded area of an electrode unit and a separator sheet inside an electrode assembly, and a method for manufacturing a secondary battery using the same.

The present invention provides an apparatus for manufacturing a secondary battery, which includes a pressing part configured to press a stack in which electrodes and separators are alternately disposed, wherein the pressing part includes: a main pressing part configured to press an entire surface of the stack; and a sub pressing part including a drum part configured to press a partial surface of the stack, on which an edge part of an electrode active material layer provided on each of the electrodes is disposed, on the entire surface, wherein the drum part includes: a body part having a rotational shaft; and an elastic part provided on an outer circumferential surface of the body part and configured to press the partial surface of the stack.

## Description

### TECHNICAL FIELD

### CROSS-REFERENCE TO RELATED APPLICATION

The present application claims the benefit of the priority of Korean Patent Application Nos. 10-2021-0124357, filed on September 16, 2021, and 10-2022-0115228, filed on September 13, 2022, which are hereby incorporated by reference in their entirety.

### TECHNICAL FIELD

The present invention relates to an apparatus for manufacturing a secondary battery and a method for manufacturing a secondary battery using the same, and more particularly, to an apparatus for manufacturing a secondary battery, which is capable of improving a non-bonded area of an electrode and a separator inside an electrode unit and a non-bonded area of an electrode unit and a separator sheet inside an electrode assembly, and a method for manufacturing a secondary battery using the same.

### BACKGROUND ART

Batteries (cells) that generate electric energy through physical or chemical reaction to supply the generated electric energy to the outside are used when AC power to be supplied to the building is not obtained, or DC power is required according to the living environments surrounded by various electric and electronic devices.

Among such batteries, primary batteries and secondary batteries, which are chemical batteries using chemical reaction, are being generally used. The primary batteries are consumable batteries which are collectively referred to as dry batteries. In addition, secondary batteries are rechargeable batteries that are manufactured by using a material in a redox process between current and a substance is repeatable several times. When the reduction reaction is performed on the material by the current, power is charged, and when the oxidation reaction is performed on the material, power is discharged. Such the charging-discharging is repeatedly performed to generate electricity.

Here, in a lithium ion battery among secondary batteries, an electrode slurry, in which an active material, a conductive material, and a binder are mixed, may be applied at a predetermined thickness to a positive electrode conductive foil and a negative electrode conductive foil to manufacture an electrode, and a separator may be interposed between both the conductive foils to manufacture an electrode unit.

In addition, the secondary batteries are classified according to their structures. For example, the secondary batteries may be classified into a cylindrical secondary battery, in which long sheet-type electrode unit is wound several times in the form of a bulk jelly roll with a separator sheet therebetween to manufacture an electrode assembly, and then, the manufactured electrode assembly is accommodated in a cylindrical can so that the can is sealed, and a pouch-type secondary battery, in which electrode units, each of which has a predetermined size, are stacked with a separator sheet therebetween, is folded to manufacture an electrode assembly, and then, the manufactured electrode is accommodated in a pouch so that the pouch is sealed.

When manufacturing the electrode, the electrode slurry is non-uniformly applied to the conductive foils due to viscosity of the electrode slurry, resulting in a difference in coating thickness of the electrode slurry. The difference in coating thickness of the electrode slurry forms an non-bonded area between the electrode and the separator inside the electrode unit manufactured by including the electrode. In addition, since the pouch-type secondary battery is manufactured by stacking the electrode units on the separator sheet, the non-bonded area is formed inside the electrode assembly including the electrode units. There is a problem in that the non-bonded area as described above causes precipitation of lithium due to interfacial resistance of the negative electrode to increase in resistance of the electrode.

### DISCLOSURE OF THE INVENTION

### TECHNICAL PROBLEM

The present invention has been made to solve the above problems, and an object of the present invention is to provide an apparatus for manufacturing a secondary battery, which is capable of improving a non-bonded area of an electrode and a separator inside an electrode unit and a non-bonded area of an electrode unit and a separator sheet inside an electrode assembly, and a method for manufacturing a secondary battery.

### TECHNICAL SOLUTION

The present invention may include an apparatus for manufacturing a secondary battery, which includes a pressing part configured to press a stack in which electrodes and separators are alternately disposed, wherein the pressing part includes: a main pressing part configured to press an entire surface of the stack; and a sub pressing part including a drum part configured to press a partial surface of the stack, on which an edge part of an electrode active material layer provided on each of the electrodes is disposed, on the entire surface, wherein the drum part includes: a body part having a rotational shaft; and an elastic part provided on an outer circumferential surface of the body part and configured to press the partial surface of the stack.

The edge part of the electrode active material layer may have a curved surface that gradually decreases in height toward an end thereof, and the drum part may be configured to press the edge part and the separator so that the edge part of the electrode active material layer and the separator, which correspond to each other, are bonded to each other.

The elastic part may be provided to be elastically deformable.

The elastic part may have an inner space, and air or a fluid may be filled into the inner space to maintain a preset pressure.

The elastic part may be made of a deformable synthetic resin, and the synthetic resin may be provided as silicon rubber.

The sub pressing part may be deformed in shape only when the partial surface is pressed.

The apparatus may further include a pressure detection part configured to detect a pressure applied to the partial surface of the stack by the sub pressing part.

The pressure detection part may include: a sensor part configured to sense a pressure; and a display part configured to display the pressure sensed by the sensor part.

The sensor part may be disposed to face the sub pressing part with the partial surface of the stack therebetween.

The stack may include an electrode tab connected to the electrode, and the sub pressing part may be connected to the electrode tab to press the partial surface of the stack, on which the edge part of the electrode active material layer provided on the electrode is disposed.

The sub pressing part may be disposed on at least one of a front or rear side of the main pressing part.

The apparatus may further include a heating part disposed behind the pressing part to apply heat to the stack in which the electrodes and the separators are stacked, wherein the sub pressing part may be disposed between the heating part and the main pressing part.

The edge part may be provided on each of both ends of the electrode active material layer provided on each of the electrodes, and the drum part may be provided in a pair, which press the partial surfaces of the stack, on which the edge parts provided on both the ends of the electrode active material layer are disposed, respectively.

The edge parts may be provided on both ends of the electrode active material layer provided on the electrode, respectively, and the drum part may be configured to press a surface including the partial surface of the stack, on which the edge part provided on each of both the ends of the electrode active material layer is disposed.

The sub pressing part may further include a pressure sensor configured to measure a pressure of the air or fluid filled into the inner space of the elastic part.

The sub pressing part may further include an injection part configured to inject the air or fluid into the inner space of the elastic part through the body part.

The present invention may include a method for manufacturing a secondary battery, the method including: an electrode unit manufacturing process of manufacturing an electrode unit in which electrodes and separators are alternately stacked; an electrode assembly manufacturing process of disposing a separator sheet between the plurality of electrode units manufactured in the electrode unit manufacturing process to manufacture an electrode assembly; and a pressing process of pressing the electrode assembly, wherein the electrode unit manufacturing process may include: a stacking process of alternately disposing the separator and the electrodes to form a stack; a bonding process of bonding each of the separators and each of the electrodes, which are provided in the stack, to each other, wherein the bonding process may include: an entire surface pressing process of an entire surface of the stack; and a first partial surface pressing process of pressing a partial surface of the stack, on which an edge part of an electrode active material layer provided on the electrode is disposed, on the entire surface of the stack.

The electrode assembly pressing process may include: a second entire surface pressing process of pressing an entire surface of the electrode assembly; and a second partial surface pressing process of pressing a partial surface of the electrode assembly, on which the edge part of the electrode active material layer provided on the electrode is disposed, on the entire surface of the electrode assembly.

### ADVANTAGEOUS EFFECTS

The apparatus for manufacturing the secondary battery and the method for manufacturing the secondary battery using the same according to the present invention may have the advantage in that the partial surface on which the edge part of the electrode active material layer provided on the electrode of the stack on the entire surface of the stack is pressed using the sub pressing part to improve the non-bonded area inside the stack.

In addition, the apparatus for manufacturing the secondary battery according to the present invention may have the advantage of being able to correspond to the various sizes and shapes of the partial surface of the entire surface of the stack without replacing the sub pressing part by using the sub pressing part including the elastic part.

In addition, the apparatus for manufacturing the secondary battery according to the present invention may have the effect of including the pressure detection part to detect the pressure at which the sub pressing part presses the stack, thereby easily managing the processibility according to the model and process environment of the stack, based on the detected pressure.

### BRIEF DESCRIPTION OF THE DRAWINGS

FIG. 1a is a perspective view of a stack according to the present invention.
FIG. 1b is a side view illustrating a configuration when the stack of FIG. 1a is viewed from one side.
FIG. 2 is a plan view illustrating a configuration when an apparatus for manufacturing a secondary battery according to Embodiment 1 of the present invention is viewed downward from above.
FIG. 3 is a side view illustrating a configuration when the apparatus for manufacturing the secondary battery of FIG. 2 is viewed from one side.
FIG. 4a is a detailed side view illustrating a side surface of the sub pressing part in the apparatus for manufacturing the secondary battery of FIG. 2.
FIG. 4b is a front view illustrating a drum part of the sub pressing part in the apparatus for manufacturing the secondary battery of FIG. 2.
FIG. 4c is a side view illustrating the drum part of the sub pressing part in the apparatus for manufacturing the secondary battery of FIG. 2.
FIG. 5a is a detailed enlarged view illustrating a state in which an elastic part presses the stack having one shape in the apparatus for manufacturing the secondary battery of FIG. 2.
FIG. 5b is a detailed enlarged view illustrating a state in which the elastic part presses the stack having another shape in the apparatus for manufacturing the secondary battery of FIG. 2.
FIG. 5c is a detailed enlarged view illustrating a state in which the elastic part presses the stack having further another shape in the apparatus for manufacturing the secondary battery of FIG. 2.
FIG. 5d is a detailed enlarged view illustrating a state in which an elastic part presses a stack according to another embodiment in the apparatus for manufacturing the secondary battery of FIG. 2.
FIG. 6 is a detailed perspective view illustrating configurations of the sub pressing part and a pressure detection part in the apparatus for manufacturing the secondary battery of FIG. 2.
FIG. 7 is an image illustrating results obtained by comparing non-bonded areas of bi-cells manufactured by an apparatus a for manufacturing a secondary battery according to a related art and an apparatus b for manufacturing a secondary battery according to the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention may provide an apparatus for manufacturing a secondary battery, which includes a pressing part 100 that presses a stack 10 in which an electrode 101 and a separator 102 are stacked.

First, the stack 10 may be configured so that the electrode 101 and the separator 102 are stacked and may have various configurations. Here, the stack 10 may be an electrode unit, in which the electrode 101 and the separator 102 are stacked, i.e., a unit cell and may mean any one of a bi-cell, a mono-cell, and a full-cell and also may mean an electrode assembly in which a plurality of electrode units (unit cells), in which the electrode 101 and the separator 102 are stacked, and a separator sheet 20 are stacked.

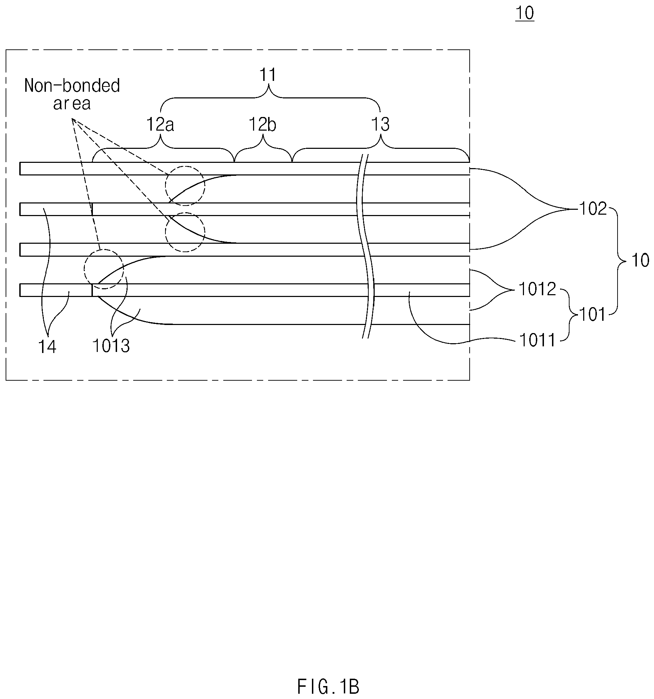

Referring to FIG. 1b, the electrode 101 includes an electrode collector 1011 and an electrode active material layer 1012 applied on a surface of the electrode collector 1011.

Here, the electrode assembly may have any structure as long as the electrode assembly has a structure in which the plurality of electrode units and the separator sheet are stacked. As an example, the electrode assembly may have a structure in which the plurality of electrode units are arranged or disposed on the separator sheet. As another example, the electrode assembly may have a structure in which the plurality of electrode units are arranged or disposed on the separator sheet, and then, the electrode units and the separator sheet are alternately stacked and folded.

Here, the stack 10 may be pressed by a pressing part 100 to be described later so as to bond the electrode to the separator, and the electrode unit to the separator sheet. Here, an entire surface of the stack 10 provided to face the pressing part 100 to be pressed may be defined as an entire surface 11.

As described above, since electrode slurry is non-uniformly applied on an electrode collector (e.g., conductive foil), the entire surface 11 may have a height difference. Particularly, since a surface formed with a relatively low height on the entire surface 11 is difficult to perform pressing during a pressing process, the surface may remain as a non-bonded area between the electrode and the separator or the electrode unit and the separator sheet to cause precipitation of lithium on an interface of a negative electrode.

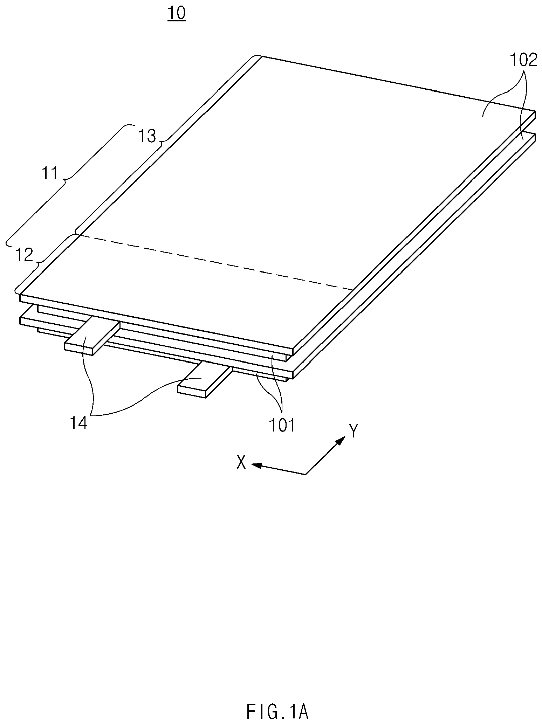

In more detail, as illustrated in FIGS. 1a to 1b, the entire surface 11 of the stack 10 may include a partial surface 12 including a surface formed with a relatively low height on the entire surface 11 and a remaining surface 13 formed with a uniform height by uniformly applying electrode slurry on the electrode collector on the entire surface 11. In the drawing, dotted lines illustrated in the stack 10 is for distinguishing the partial surface 12 from the remaining surface 13 and does not mean that an internal structure of the stack 10 is separated.

Here, the partial surface 12 may be a surface including a surface formed with a relatively low height on the entire surface 11 of the stack 10 because the electrode slurry is less applied on the electrode collector and may have various configurations.

As an example, the partial surface 12 may be a surface on which a height difference is formed, and may include, as illustrated in FIG. 1b, a first partial surface 12a formed with a relatively low height on the entire surface 11 and a second partial surface 12b formed at a height greater than that of the first partial surface 12a.

Here, the first partial surface 12a may be a surface formed with a relatively low height on the entire surface 11 and also may be an area of the stack 10 on which an edge part 1013 of an electrode active material layer 1012 provided on the electrode 101 is disposed. The edge part 1013 of the electrode active material layer 1012 is formed as a curved surface that decreases in height toward an end as the electrode slurry flows downward, and the surface of the stack 10 on which the edge part is disposed may have a low height by the edge part 1013 that is the curved surface. Thus, a non-bonded state is maintained between the edge part 1013 of the electrode active material layer 1012 and the separator 102, which correspond to each other. A technical feature of the present invention is to be bonded between the edge part 1013 of the electrode active material layer and the separator 102, which are not bonded to each other.

In addition, the second partial surface 12b may be a surface formed higher than the first partial surface 12a and may be formed in various directions with respect to the first partial surface 12a according to a size for each model of the stack 10 and a degree of non-uniform application of the electrode slurry within the stack 10.

For example, as illustrated in FIG. 1b, the second partial surface 12b may be formed between the first partial surface 12a and the remaining surface 13. However, the formation of the second partial surface 12b is not limited thereto and may be formed in various manners such as being surrounded by the first partial surface 12a or formed while surrounding the first partial surface 12a.

As another example, the partial surface 12 may be provided as only the first partial surface 12a having the relatively low height on the entire surface 11.

The partial surface 12 may be disposed on any portion of the stack 10.

For example, as a length of the stack 10 increases, the electrode slurry may be less likely to reach an edge of the electrode collector when the electrode slurry is applied, and thus, the partial surface 12 may be disposed to correspond to an edge of the stack 10.

Particularly, the partial surface 12 may be disposed to correspond to the edge area of the stack 10 on which the electrode tab 14 is disposed on the edge area of the stack 10.

In the case of manufacturing two electrodes by applying and drying the electrode slurry to a central portion of one electrode collector to cut the electrode collector during the electrode manufacturing, it may be expected that the electrode slurry is sufficiently applied to an edge area of the stack 10, which originally corresponds to the central portion of the electrode current collector, but it may be understood that the edge area of the electrode collector, on which the electrode tab 14 is disposed, is easy to allow the electrode slurry to be relatively less reached.

Here, the electrode tab 14 may be formed on the electrode collector through a notching process before the electrode slurry is applied or may be attached to any portion of the electrode collector after the electrode slurry is applied so as to be connected to the electrode.

The pressing part 100 may be configured to press the stack 10 and may have various configurations.

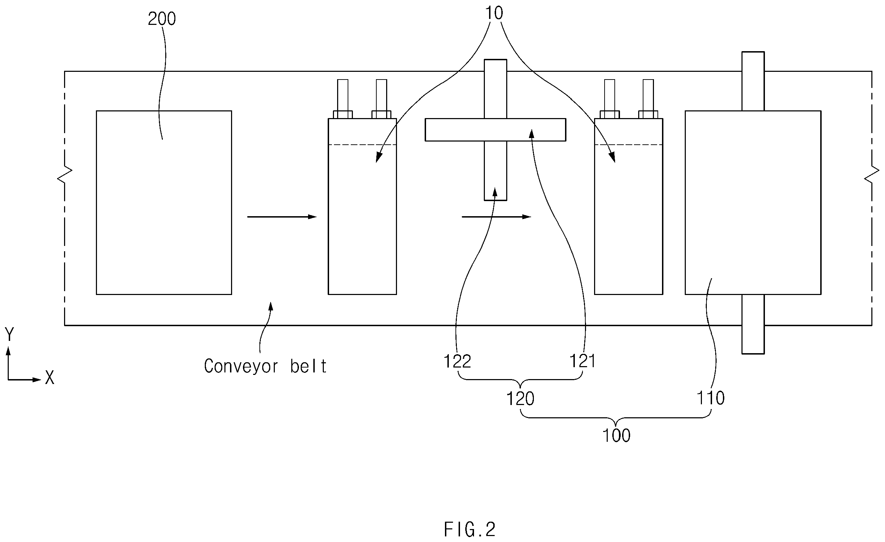

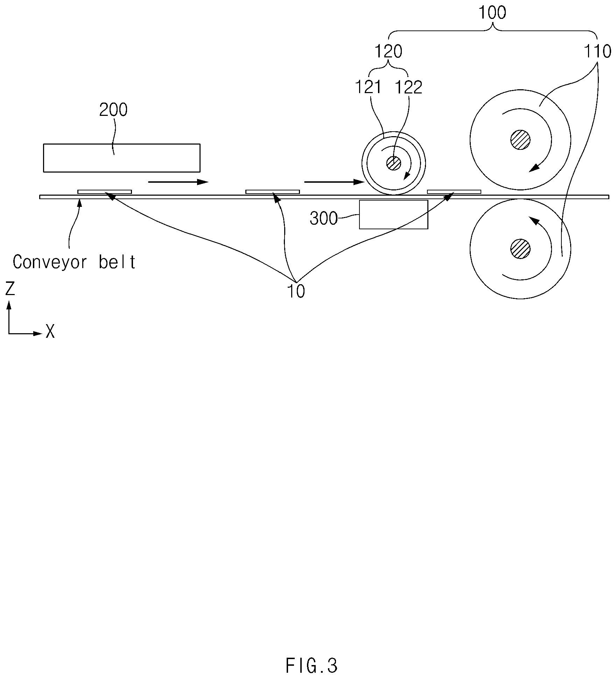

Particularly, as illustrated in FIGS. 2 and 3, the pressing part 100 according to the present invention may include: a main pressing part 110 that presses the entire surface 11 of the stack 10; and a sub pressing part 120 that presses the partial surface 12 of the stack 10.

Here, the main pressing part 110 may be configured to press the entire surface 11 of the stack 10 and may have various configurations.

For example, the main pressing part 110 may be provided as a roller that presses the stack 10 while rotating or a press that presses the stack 10 while moving the stack 10 in a vertical direction.

Here, when the stack 10 is the electrode unit, the main pressing part 110 may be provided as a roller, and when the stack 10 is the electrode assembly, the main pressing part 110 may be provided as a press.

The sub pressing part 120 may be configured to press the partial surface 12 of the stack 10 and may have various configurations.

In more detail, the sub pressing part 120 may be disposed on at least one of a front or rear side of the main pressing part 110 to press the partial surface 12 of the stack 10 before the pressing of the entire surface 11 of the stack 10 and/or after the pressing of the entire surface 11. Thus, the sub pressing part 120 may press the partial surface 12 on which the edge part 1013 of the electrode active material layer 1012 provided in the electrode 101 is disposed to bond a non-bonded area of the stack 10, i.e., a non-bonded area between the edge part 1013 of the electrode active material layer and the separator 102, which correspond to each other. A direction toward the moving direction of the stack 10 on a conveyor belt may be referred to as a front side, and a direction opposite to the front side may be referred to as a rear side.

In addition, as illustrated in FIG. 3, the sub pressing part 120 may include a drum part 121 that presses the partial surface 12 of the stack 10, on which the edge part 1013 of the electrode active material layer provided on the electrode on the entire surface of the stack 10.

The drum part 121 may be configured to press the partial surface 12 of the stack 10 while rotating and may have various configurations.

In more detail, since the stack 10 is formed in various lengths and widths for each model, and also, the area on which the electrode slurry is non-uniformly applied is formed irregularly for each stack 10, a surface area of the surface (e.g., the first partial surface 12a) having a relatively low height on an entire surface 11 of the stack 10 may be formed in various sizes for each individual stack 10.

Here, when the drum part 121 of the sub pressing part 120 is made of only a hard material (e.g., steel), and thus, the shape of the partial surface 12 is not deformed during the pressing, the drum part 121 may not respond to various size and shapes of the surface formed with a relatively low height. Thus, inconvenience in which the sub pressing part 120 is frequently replaced may occur in consideration of this structure by the user.

In the present invention, the drum part 121 capable of responding to various changes of the partial surface 12 of the stack, on which the edge part 1013 of the electrode active material layer is disposed, on the entire surface 11 of the individual stack 10 without replacing the sub pressing part 120 or the drum part 121 provided in the sub pressing part 120 may be provided, and thus, hereinafter, the drum part 121 may be described in detail.

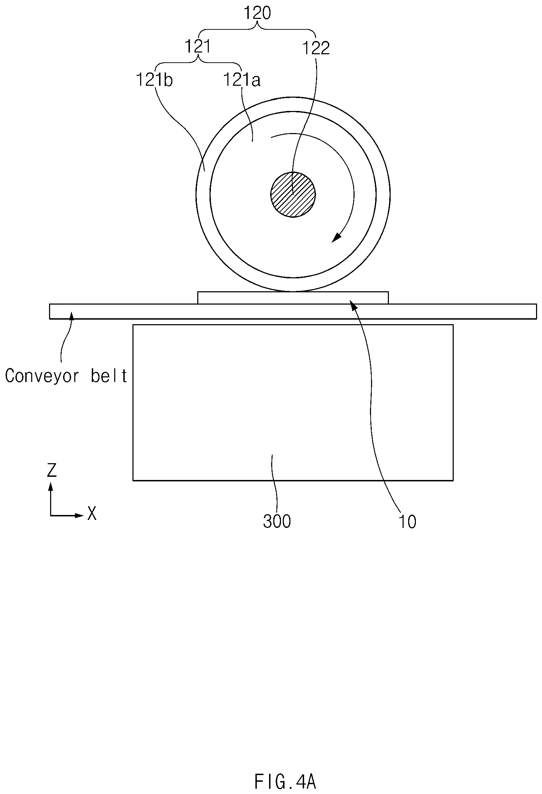

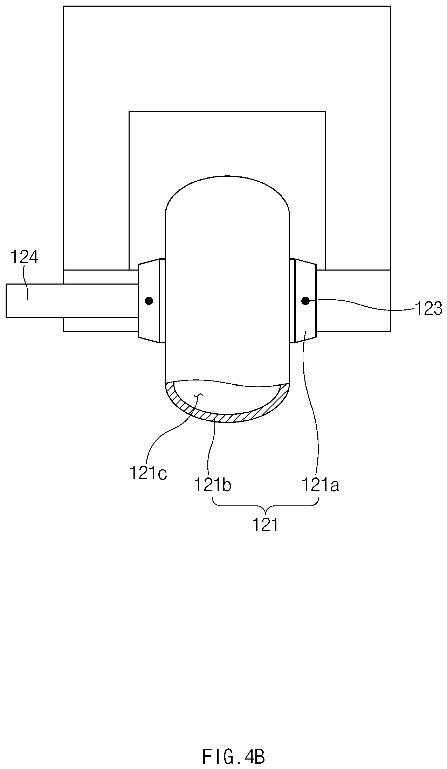

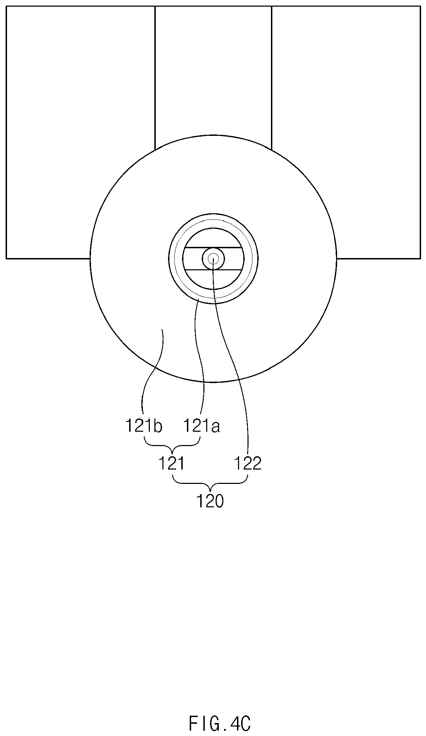

Here, as illustrated in FIGS. 4a to 4c, the drum part 121 may include a body part 121a having a rotational shaft 122 and an elastic part 121b provided to be fixedly coupled along an outer circumferential surface of the body part 121a so as to be elastically deformed.

Here, the body part 121a may be configured to be coupled to the rotational shaft 122 and may have various configurations.

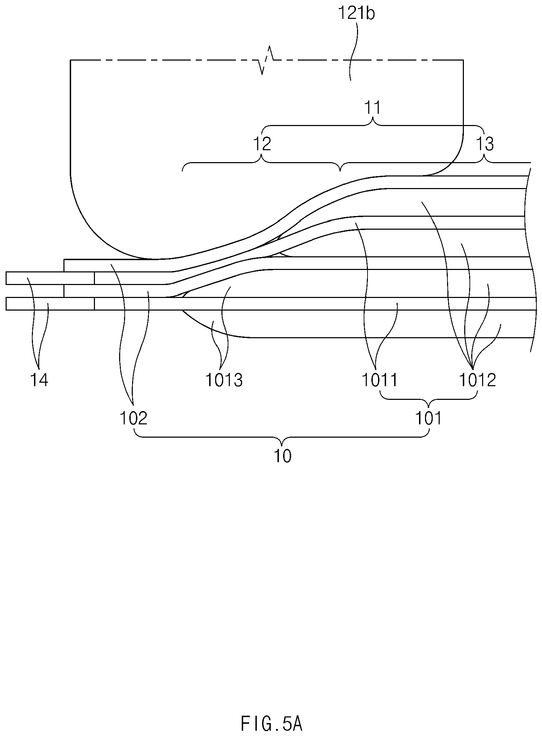

As illustrated in FIG. 5a, in the drum part 121 having such a configuration, when the body part 121a rotates by the rotational shaft 122, the elastic part 121b may be interlocked with the body part 121a while rotating to press the partial surface 12 of the stack 10 on which the edge part 1013 of the electrode active material layer is disposed. Here, the elastic part 121b may be deformed according to the shape of the stack 10 that is deformed when the partial surface 12 of the stack 10 is pressed to stably press the entire surface of the partial surface 12 of the stack 10 as a whole, particularly, to bond the non-bonded area between the edge part 1013 of the electrode active material layer and the separator 102, which correspond to each other.

More specifically, the body part 121a may be configured to receive rotation force from the rotational shaft 122 to rotate the drum part 121 and may have various configurations. For example, the body part 121a may have a cylindrical cylinder shape, a wheel shape having a plurality of spokes, and the like.

Here, the elastic part 121b may be provided to be fixedly coupled along the outer circumferential surface of the body part 121a so as to be elastically deformable and may have various configurations.

That is, as illustrated in FIGS. 4a to 4c, the elastic part 121b has an inner space 121c, and a structure in which air or a fluid is filled to maintain a preset pressure is provided in the inner space 121c. For example, the elastic part 121b may have a shape of a bicycle wheel filled with air.

Hereinafter, a case in which the elastic part 121b corresponds to various changes in the partial surface of the stack on which the edge part of the electrode active material layer is disposed on the entire surface 11 will be described in detail. Here, a width of the partial surface 12, a width of the first partial surface 12a, and a width of the drum part 121, which will be described later, may be understood as a width in which a traveling direction of the conveyor belt of the stack 10 is a longitudinal direction.

Specifically, the elastic part 121b may have an elastic material capable of elastically deforming the shape of the pressing surface when the partial surface 12 is pressed, and thus, the drum part 121 may response to the various change of the partial surface 12 of the stack 10, on which the edge part 1013 of the electrode active material layer is disposed, on the entire surface 11.

As an example, as illustrated in FIG. 5a, when the drum part 121 presses the partial surface of the stack, on which the edge part of the electrode active material layer 1012 is disposed, the elastic part 121b may allow the pressing surface of the elastic part 121b, which presses the partial surface 12, to be deformed to be stepped in response to the shape of the partial surface 12. Thus, the sub pressing part 120 may press all portions of the partial surface 12 including the first partial surface 12a and the second partial surface 12b.

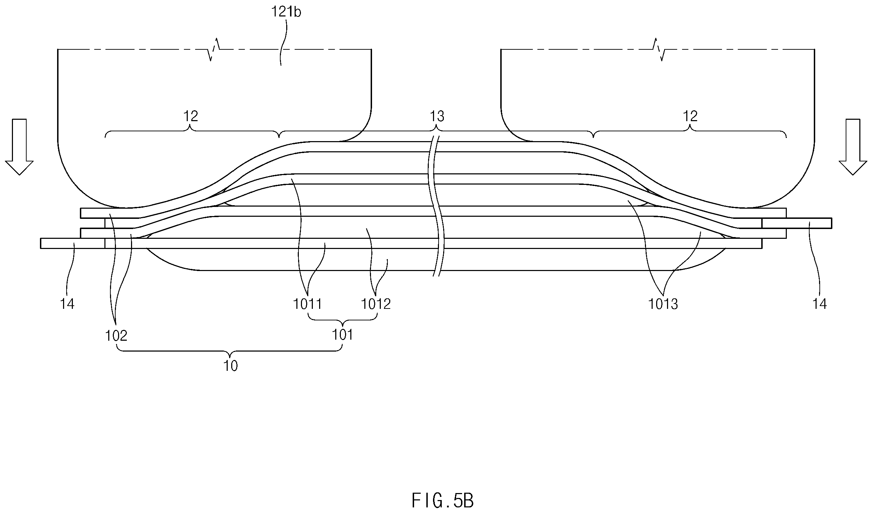

As another example, as illustrated in FIG. 5b, in the case of the stack 10 in which two electrode tabs 14 are drawn out in both directions of the electrode, respectively, the edge part 1013 of the electrode active material layer 1012 may be provided on each of both ends of the electrode active material layer provided on the electrode, and thus, the drum part 121 may be provided in a pair to press the partial surface 12 of the stack 10, on which the edge part 1013 provided on each of both the ends of the electrode active material layer is disposed. That is, the pair of drum parts 121 may press the partial surfaces 12 disposed on both sides of the stack, respectively.

Particularly, when the width of the partial surface 121 is larger than that of the drum part 121, the pressing surface of the elastic part 121b may be spread in the width direction of the partial surface 12 to press all the portions of the partial surface 12.

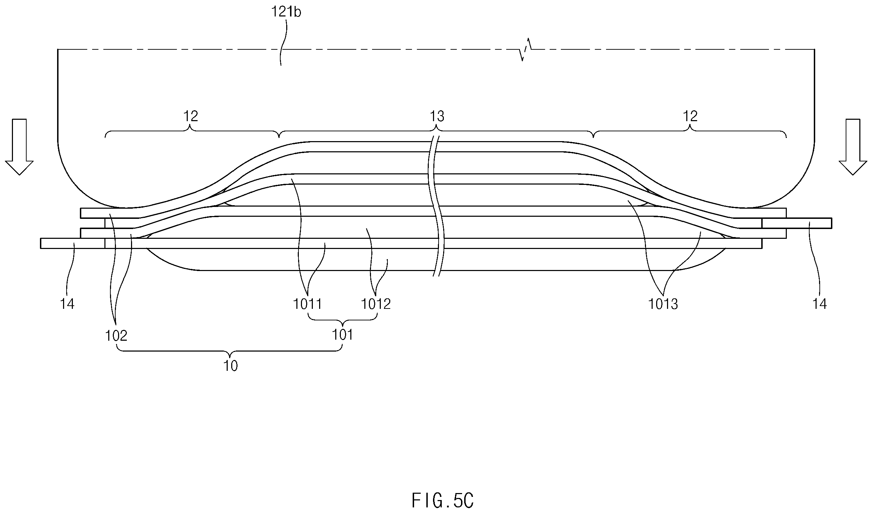

As another example, in the drum part 121, as illustrated in FIG. 5c, in the case of the stack 10 in which two electrode tabs 14 are drawn out in both directions of the electrode, respectively, the drum part 121 may be provided in a pair to press the entire surface including the partial surface 12 of the stack 10, on which the edge part 1013 provided on each of both the ends of the electrode active material layer is disposed. That is, one drum part 121 may press the entire surface including the partial surface of the stack, on which the edge part is disposed.

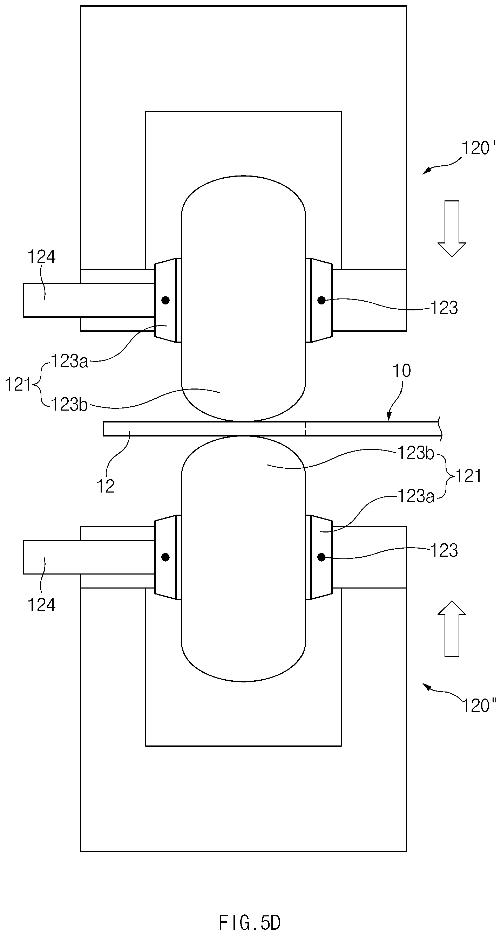

As another example, as illustrated in FIG. 5d, the sub pressing part may be disposed to correspond to each of top and bottom surfaces of the stack 10 and thus may press upper and lower portions of the partial surface 12 of the stack at the same time. Here, the sub pressing part disposed below the stack is referred to as a lower sub pressing part 120', and the sub pressing part disposed above the stack is referred to as an upper sub pressing part 120". That is, in a state in which the lower sub pressing part 120' is supported on the lower portion of the partial surface 12 of the stack 10, the upper sub pressing part 120' presses the upper portion of the partial surface of the stack. As a result, the partial surface of the stack disposed between the upper and lower sub pressing parts are pressed to more effectively press the partial surface of the stack 10, on which the edge part 1013 provided on each of both the ends of the electrode active material layer is disposed.

The elastic part 121b may have various materials capable of being elastically deformed. For example, the elastic part 121b may be made of a deformable synthetic resin, and the synthetic resin may have a material including any one of silicone rubber.

The shape of the elastic part 121b of the sub pressing part 120 may be deformed only when the partial surface is pressed. Also, the elastic part 121b may have various structures.

As an example, the elastic part 121b may have a pad structure made of only an elastic material and have a predetermined thickness. As another example, the elastic part 121b may have an inner space, and a tire structure in which air or a fluid is filled to maintain a preset pressure may be provided in the inner space.

Here, the preset pressure may be a predetermined pressure value that allows the elastic part 121b to be elastically deformed together with the pressing of the partial surface 12.

Here, the preset pressure may be variously set by the user according to the material and size of the elastic part 121b, and the sub pressing part 120 may be adjusted by receiving feedback of the pressure value, at which the partial surface 12 of the stack 10 is pressed, through a pressure detection part 300 to be described later.

In addition, the sub pressing part 120 may further include a pressure sensor 123 that measures a pressure of the air or fluid filled in the inner space of the elastic part 121b. The pressure sensor 123 may be provided in a through-hole formed in the body part 121a and connected to the inside of the elastic portion 121b. Accordingly, an internal pressure of the elastic part 121b may be easily checked even from the outside.

In addition, the sub pressing part 120 may further include an injection part 124 that injects the air or fluid into the inner space of the elastic part 121b through the body part 121a. Thus, when the internal pressure of the elastic part 121b is low or high, the air or fluid may be injected or discharged through the injection part 124 so as to be maintained constantly. The sub pressing part 120 may have any configuration as long as the shape is deformed when the partial surface 12 is pressed and may not be limited to the case of being provided with the above-described elastic part 121b.

The rotational shaft 122 may be configured to rotate the drum part by being coupled to the drum part 121 and may have various configurations.

For example, one end of the rotational shaft 122 may be connected to a driving motor to receive rotational force, and thus, the rotational force of the driving motor may be transmitted to the above-described body part 121a. In addition, the rotational shaft 122 may include a bearing (not shown) provided while surrounding an outer circumferential surface of the rotational shaft 122 between the rotational shaft 122 and the body part 121a.

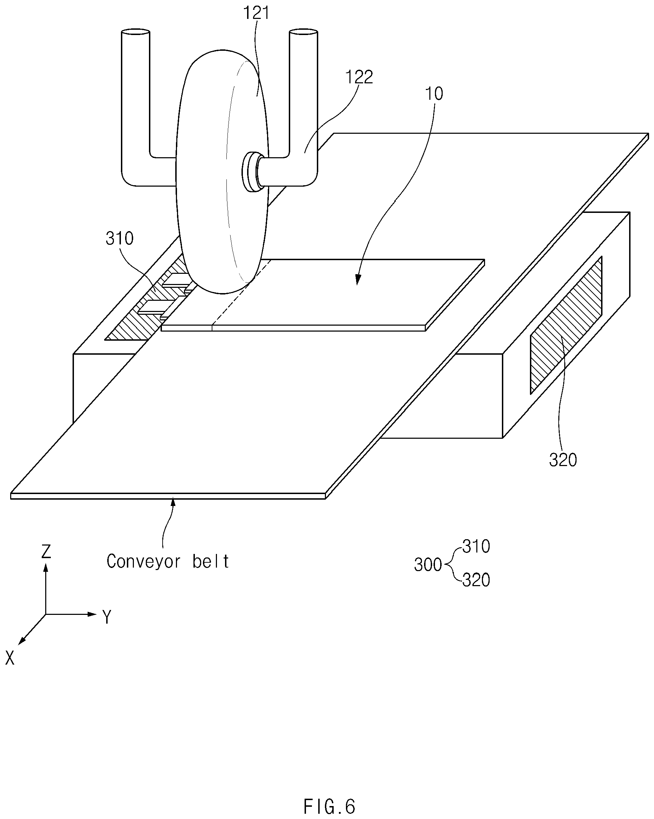

The apparatus for manufacturing the secondary battery according to the present invention may further include a pressure detection part 300 as illustrated in FIG. 6.

Here, the pressure detection part 300 may be configured to detect a pressure applied by the sub pressing part 120 to the partial surface 12 of the stack 10 and may have various configurations.

That is, in the apparatus for manufacturing the secondary battery according to the present invention, the user may detect the pressure at which the sub pressing part 120 presses the stack 10 through the pressure detection part 300 to manage processibility according to the model and process environment of the stack by using data of pressures applied for the model and process environment of the stack 10.

The pressure detection part 300 may be disposed at various positions. For example, the pressure detection part 300 may be disposed below the conveyor belt at a position corresponding to the sub pressing part 120.

In addition, the pressure detection part 300 may include, as illustrated in FIG. 6, a sensor part 310 that senses the pressure; and a display part 320 displaying the pressure sensed by the sensor part 310.

Here, the sensor part 310 may be configured to sense the pressure and may have various configurations.

That is, the sensor part 310 may include a mechanical, electronic, or semiconductor type pressure sensor that senses the pressure, and various types of pressure sensors may be used according to a required pressure range and pressure measurement environments.

In addition, the sensor part 310 may be disposed at various positions. However, in order to measure the pressure applied to the partial surface 12 when the sub pressing part 120 presses the partial surface 12, as illustrated in FIG. 6, the sensor part 310 may be preferably disposed to face the sub pressing part 120 with the partial surface 12 of the stack 10 therebetween. That is, the sensor part 310 may be disposed on a line through which the partial surface 12 of the stack 10 passes.

The display part 320 may be configured to display the pressure sensed by the sensor part 310 may have various configurations.

That is, the display part 320 may have any configuration as long as the display part 320 is configured to provide the pressure data sensed by the sensor part 310 to the user, and for example, the display part 320 may include a display device capable of outputting the pressure data as an image.

The apparatus for manufacturing the secondary battery according to the present invention may further include a heating part 200 that applies heat to the stack 10 in which the electrode and the separator are stacked.

Here, the heating part 200 may be configured to be disposed behind the pressing part 100 so as to apply heat to the stack 10 in which the electrode and the separator are stacked and may have various configurations. As described above, the rear side may refer to a direction opposite to the direction in which the stack 10 travels on the conveyor belt.

In more detail, the heating part 200 may be disposed behind the pressing part 100 to apply the heat to the stack 10 before the pressing part 100 presses the stack 10. That is, as a temperature of the stack 10 increases, bonding between the electrode and the separator may be improved, and wrinkles formed on the electrode, the separator, and the separator sheet inside the stack during the manufacturing process may be improved.

Here, the stack 10 may be heated to a temperature higher than room temperature. Here, the meaning of the room temperature refers to a temperature range called 'room temperature' in the art. In other words, the room temperature refers to a temperature of a laboratory, etc., in particular, it is an expression of temperature conditions used when experiments are conducted without specifying or controlling a temperature or when samples and substances are left in an indoor space and refers to an indoor air temperature. In general, it is a temperature at which humans lives comfortably and is usually around 15°C to 20°C.

As described above, the sub pressing part 120 may be disposed at various positions, but when the sub pressing part 120 presses the partial surface 12 in the state in which the stack 10 is heated, the non-bonded area inside the stack 10 may be improved more effectively, and thus, as illustrated in FIG. 2 to 3, the sub pressing part 120 may be preferably disposed between the heating part 200 and the main pressing part 110.

Hereinafter, a method for manufacturing a secondary battery using the apparatus for manufacturing the secondary battery according to the present invention will be described.

The method for manufacturing the secondary battery according to the present invention includes: an electrode unit manufacturing process of manufacturing an electrode unit in which an electrode and a separator are stacked; an electrode assembly manufacturing process of manufacturing an electrode assembly in which a plurality of electrode units manufactured in the electrode unit manufacturing process and a separator sheet are stacked; and an electrode assembly pressing process of pressing the electrode assembly.

Here, the electrode unit manufacturing process may be a process of manufacturing the electrode unit in which the electrode 101 and the separator 102 are stacked and may be performed in various manners.

For example, the electrode unit manufacturing process may include: a stacking process of stacking the electrode 101 on the separator 102 to form a stack 10; and a bonding process of bonding the separator to the electrode within the stack 10.

Here, the stacking process may be a process of stacking the electrode 101 on the separator 102 to form the stack 10 and may be performed in various manners.

Here, the electrode 101 includes an electrode collector 1011 and an electrode active material layer 1012 applied on the electrode collector 1011. That is, the electrode 101 may be manufactured into a positive electrode or a negative electrode by applying electrode slurry on the electrode collector (conductive foil) 1011 so as to be applied on the electrode collector 1011, and the separator may be interposed between the electrodes. However, in the electrode manufacturing process, the electrode slurry may be non-uniformly applied on the electrode collector. That is, the electrode slurry is irregularly applied on an edge part 1013 of the electrode active material layer 1012 applied on the electrode, and thus, the edge part 1013 of the electrode active material layer 1012 has a curved surface of which a height gradually decreases toward an end thereof.

The bonding process may be a process of bonding the separator to the electrode in the stack and may be performed in various manners.

For example, the bonding process may include a first entire surface pressing process of pressing an entire surface of the stack 10; and a first partial surface pressing process of pressing a partial surface 12 having a height differences in the stack.

Here, the first entire surface pressing process may be a process of pressing an entire surface 11 of the stack 10 and may be performed in various manners.

Here, the first entire surface pressing process may be performed by pressing the entire surface 11 of the stack 10 through the main pressing part 110 described above. However, since the electrode slurry is non-uniformly applied on the electrode collector, a difference in height occurs on the entire surface of the stack 10, and a non-bonded area may occur on the partial surface 12 of the stack, on which the edge part of the electrode active material layer is disposed, on the entire surface (see FIG. 1b).

The first partial surface pressing process may be a process of pressing the partial surface 12 of the stack 10, on which the edge part 1013 of the electrode active material layer 1012 is disposed, and may be performed in various manners.

Specifically, the first partial surface pressing process may be performed by pressing the partial surface 12 of the stack 10 through the sub pressing part 120. Here, the detailed configuration and effects of the sub pressing part 120 may be cited from the above description.

That is, in the first partial surface pressing process, the partial surface 12 of the stack 10 may be additionally pressed to bond the non-bonded area between the edge part 1013 of the electrode active material layer of the stack and the separator 102. Here, the first partial surface pressing process may be performed not only after performing the first entire surface pressing process but also before performing the first entire surface pressing process.

The electrode assembly manufacturing process may be a process of manufacturing an electrode assembly in which a plurality of electrode units manufactured in the electrode unit manufacturing process and a separator sheet are stacked, and may be performed in various manners. Here, the electrode assembly may also be understood as a configuration corresponding to the above-described stack 10, but for distinct from the above-described electrode unit, hereinafter, the configuration will be described as the electrode assembly.

Specifically, in the electrode assembly manufacturing process, the electrode units manufactured in the above-described electrode unit manufacturing process may be arranged side by side on the separator sheet to manufacture the electrode assembly, or after arranging the electrode units side by side on the separator sheet, the separator sheet may be folded so that the electrode units and the separator sheet are alternately stacked to manufacture the electrode assembly.

However, in the case of the electrode unit in which the non-bonded area occurs between the electrode and the separator, a specific area of the electrode unit may have a relatively low height compared to other areas. Therefore, when manufacturing the electrode assembly, if the electrode units are arranged and stacked in parallel in one direction, the non-bonded area between the electrode unit and the separator sheet may be formed, and a surface disposed at a relatively low height on an entire surfaces of the electrode assembly may be formed.

The electrode assembly pressing process may be a process of pressing the electrode assembly and may be performed in various manners.

For example, the electrode assembly pressing process may include: a second entire surface pressing process of pressing an entire surface of the electrode assembly; and a second partial pressing process of pressing a partial surface of the electrode assembly, on which a height difference is formed on an outer surface.

Here, the second entire surface pressing process may be a process of pressing the entire surface of the electrode assembly and may be performed in various manners.

Here, the second entire surface pressing process may be performed by pressing the entire surface of the electrode assembly through the main pressing part 110 described above. However, since a difference in height occurs on the entire surface of the electrode assembly as described above, the non-bonded area may occur on the partial surface including the surface having a relatively low height on the entire surface.

The second partial surface pressing process may be a process of pressing the partial surface on which the height difference is formed on the outer surface of the electrode assembly and may be performed in various manners.

Specifically, the second partial surface pressing process may be performed by pressing the partial surface of the electrode assembly, on which the edge part of the electrode active material layer is disposed, through the sub pressing part 120. Here, the detailed configuration and effects of the sub pressing part 120 may be cited from the above description.

That is, in the second partial surface pressing process, the non-bonded area of the electrode assembly may be improved by additionally pressing the partial surface of the electrode assembly. Here, the second partial surface pressing process may be performed not only after performing the second entire surface pressing process but also before performing the second entire surface pressing process.

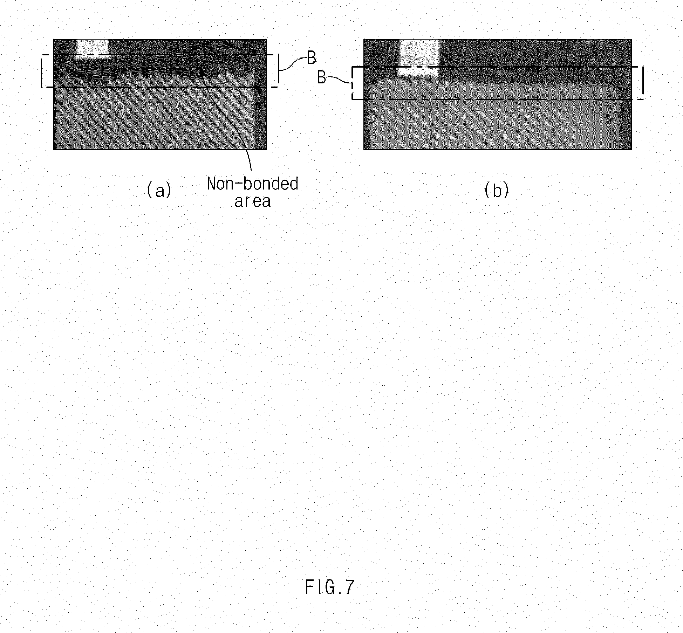

Hereinafter, referring to FIG. 7, a size of the non-bonded area of the stack according to whether the present invention is applied will be described. Here, the stack may be a bi-cell, and (a) of FIG. 7 illustrates a front image (hereinafter, reference to as `Comparative Example') of a bi-cell manufactured according to the related art, and (b) of FIG. 7 illustrates a front image (hereinafter, referred to as an "embodiment of the present invention') of a bi-cell manufactured according to the present invention.

First, referring to the front image of the bi-cell, which is formed by Comparative Example in (a) of FIG. 7, it is seen that an non-bonded area of an electrode and a separator, which has a black color, is formed on an edge portion B corresponding to an upper portion of the bi-cell, i.e., an electrode tab. In addition, in the case of an electrode assembly including the unit cell as described above, it is expected that a non-bonded area between the unit cell and a separator sheet occurs, and thus, lithium is precipitated on a negative electrode to increase in resistance of the electrode. Thus, a problem in which performance of the secondary battery is deteriorated may occur.

On the other hand, referring to the front image of the bi-cell formed according to the embodiment of the present invention in (b) of FIG. 7, it is seen that almost no non-bonded area is formed on an upper portion of the bi-cell, i.e., an edge portion B corresponding to the electrode tab. Therefore, it is expected that the electrode unit formed according to an embodiment of the present invention will hardly form not only the non-bonded area of the electrode and the separator inside the electrode unit, but also the non-bonded area between the unit cell and the separator sheet on the electrode assembly, and thus, there may be an advantage in that the performance of the secondary battery is improved by minimizing the lithium precipitation on the negative electrode due to interfacial resistance.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Stack
11: Entire surface
12: Partial surface
12a: First partial surface
12b: Second partial surface
13: Remaining surface
14: Electrode tab
101: Electrode
1011: Electrode collector
1012: Electrode active material layer
1013: Edge part
102: Separator
20: Electrode sheet
100: Pressing part
110: Main pressing part
120: Sub pressing part
121: Drum part
121a: Body part
121b: Elastic part
122: Rotational shaft
123: Pressure sensor
124: Injection part
200: Heating part
300: Pressure detection part
310: Sensor part
320: Display part

## Claims

1. An apparatus for manufacturing a secondary battery, which comprises a pressing part configured to press a stack in which electrodes and separators are alternately disposed,
wherein the pressing part comprises:
a main pressing part configured to press an entire surface of the stack; and
a sub pressing part comprising a drum part configured to press a partial surface of the stack, on which an edge part of an electrode active material layer provided on each of the electrodes is disposed, on the entire surface of the stack,
wherein the drum part comprises:
a body part having a rotational shaft; and
an elastic part provided on an outer circumferential surface of the body part and configured to press the partial surface of the stack.

2. The apparatus of claim 1, wherein the edge part of the electrode active material layer has a curved surface that gradually decreases in height toward an end thereof, and
the drum part is configured to press the edge part and the separator so that the edge part of the electrode active material layer and the separator, which correspond to each other, are bonded to each other.

3. The apparatus of claim 2, wherein the elastic part is provided to be elastically deformable.

4. The apparatus of claim 3, wherein the elastic part has an inner space, and
air or a fluid is filled into the inner space to maintain a preset pressure.

5. The apparatus of claim 3, wherein the elastic part is made of a deformable synthetic resin, and
the synthetic resin is provided as silicon rubber.

6. The apparatus of claim 1, wherein the sub pressing part is deformed in shape only when the partial surface is pressed.

7. The apparatus of claim 1, further comprising a pressure detection part configured to detect a pressure applied to the partial surface of the stack by the sub pressing part.

8. The apparatus of claim 7, wherein the pressure detection part comprises:
a sensor part configured to sense a pressure; and
a display part configured to display the pressure sensed by the sensor part.

9. The apparatus of claim 8, wherein the sensor part is disposed to face the sub pressing part with the partial surface of the stack therebetween.

10. The apparatus of claim 1, wherein the stack comprises an electrode tab connected to the electrode, and
the sub pressing part is connected to the electrode tab to press the partial surface of the stack, on which the edge part of the electrode active material layer provided on the electrode is disposed.

11. The apparatus of claim 1, wherein the sub pressing part is disposed on at least one of a front or rear side of the main pressing part.

12. The apparatus of claim 11, further comprising a heating part disposed behind the pressing part to apply heat to the stack in which the electrodes and the separators are stacked,
wherein the sub pressing part is disposed between the heating part and the main pressing part.

13. The apparatus of claim 1, wherein the edge part is provided on each of both ends of the electrode active material layer provided on each of the electrodes, and
the drum part is provided in a pair, which press the partial surfaces of the stack, on which the edge parts provided on both the ends of the electrode active material layer are disposed, respectively.

14. The apparatus of claim 1, wherein the edge parts are provided on both ends of the electrode active material layer provided on the electrode, respectively, and
the drum part is configured to press a surface comprising the partial surface of the stack, on which the edge part provided on each of both the ends of the electrode active material layer is disposed.

15. The apparatus of claim 4, wherein the sub pressing part further comprises a pressure sensor configured to measure a pressure of the air or fluid filled into the inner space of the elastic part.

16. The apparatus of claim 4, wherein the sub pressing part further comprises an injection part configured to inject the air or fluid into the inner space of the elastic part through the body part.

17. The apparatus of claim 1, wherein the sub pressing part is provided in a pair, which are disposed to correspond to upper and lower portions of the partial surface of the stack to press the upper and lower portions of the partial surface of the stack at the same time.

18. A method for manufacturing a secondary battery, the method comprising:
an electrode unit manufacturing process of manufacturing an electrode unit in which electrodes and separators are alternately stacked;
an electrode assembly manufacturing process of disposing a separator sheet between the plurality of electrode units manufactured in the electrode unit manufacturing process to manufacture an electrode assembly; and
a pressing process of pressing the electrode assembly,
wherein the electrode unit manufacturing process comprises:
a stacking process of alternately disposing the separator and the electrodes to form a stack;
a bonding process of bonding each of the separators and each of the electrodes, which are provided in the stack, to each other,
wherein the bonding process comprises:
an entire surface pressing process of an entire surface of the stack; and
a first partial surface pressing process of pressing a partial surface of the stack, on which an edge part of an electrode active material layer provided on the electrode is disposed, on the entire surface of the stack.

19. The method of claim 18, wherein the electrode assembly pressing process comprises:
a second entire surface pressing process of pressing an entire surface of the electrode assembly; and
a second partial surface pressing process of pressing a partial surface of the electrode assembly, on which the edge part of the electrode active material layer provided on the electrode is disposed, on the entire surface of the electrode assembly.
